# EUROPÄISCHE PATENTSCHRIFT

(11) **EP 4 568 238 B1**
(45) Veröffentlichungstag und Bekanntmachung des Hinweises auf die Patenterteilung: **18.03.2026**
(21) Anmeldenummer: 23214914.6
(22) Anmeldetag: 07.12.2023
(51) Int. Cl.: H04N 13/117, H04N 13/239

(54) **UMGEBUNGSÜBERWACHUNGSVORRICHTUNG UND VERFAHREN ZUM BETREIBEN EINER UMGEBUNGSÜBERWACHUNGSVORRICHTUNG**
SURROUNDINGS MONITORING DEVICE AND METHOD FOR OPERATING A SURROUNDINGS MONITORING DEVICE
DISPOSITIF DE SURVEILLANCE D'ENVIRONNEMENT ET PROCÉDÉ DE FONCTIONNEMENT D'UN DISPOSITIF DE SURVEILLANCE D'ENVIRONNEMENT

(43) Veröffentlichungstag der Anmeldung: 11.06.2025
(73) Patentinhaber: SICK AG, 79183 Waldkirch (DE)
(72) Erfinder: DIENG, Thomas, 79106 Freiburg (DE); STULZ, Mareike, 79183 Waldkirch (DE); HEINZ, Matthias, 79183 Waldkirch (DE)
(74) Vertreter: Manitz Finsterwald Patent- und Rechtsanwaltspartnerschaft mbB

(56) Entgegenhaltungen:
- US-A1- 2005 265 619
- US-A1- 2019 387 149

## Beschreibung

Die Erfindung betrifft eine Umgebungsüberwachungsvorrichtung für Fahrzeuge, insbesondere für Baumaschinen oder landwirtschaftliche Maschinen, und ein Verfahren zum Betreiben einer Umgebungsüberwachungsvorrichtung.

Bei Fahrzeugen und insbesondere bei landwirtschaftlichen Maschinen und Baumaschinen ist ein schnell wachsender Bedarf an 3D-Sensorik zu sehen. Dieser Bedarf ergibt sich durch Assistenzfunktionen für bemannte Fahrzeuge, jedoch auch zunehmend durch entsprechende Funktionalität von unbemannten Fahrzeugen. Für die Sensorik sind zum Abdecken möglichst vielfältiger Applikationen, nachfolgend auch als "Anwendung" bezeichnet, möglichst kostengünstige Lösungen gefragt.

Grundlegend ist für die Umgebungsüberwachung der Fahrzeuge ein großer Öffnungswinkel nötig. Jedoch bietet ein kleinerer Öffnungswinkel Vorteile wie eine verbesserte Tiefengenauigkeit und einen größeren Entfernungsbereich. Um alle geforderten Applikationen abdecken zu können, werden daher verschiedene Gerätevarianten benötigt, mit denen sich unterschiedliche Öffnungswinkel darstellen lassen.

Dies kann etwa dadurch erreicht werden, dass je nach Applikation verschiedene Gerätevarianten verwendet werden. Diese Lösung ist jedoch kostenintensiv, da ein Fahrzeug bzw. eine Applikation mit mehreren parallel betriebenen Geräten ausgestattet werden muss. Zudem kann auf motorbetriebene Zoomobjektive zurückgegriffen werden. Allerdings ist Stereotechnologie stark abhängig von der Qualität der geometrischen Kalibrierung. Bei motorbetriebenen Zoomobjektiven müssen alle Einstellmöglichkeiten kalibriert werden und reproduzierbar einstellbar sein, was zu einem hohen Aufwand und hohen Kosten führt.

US 2005/0265619 A1 offenbart eine Umgebungsüberwachungsvorrichtung mit den Merkmalen gemäß dem Oberbegriff des Anspruchs 1. Das darin offenbarte System kann beispielsweise als Überwachungssystem an einem Fahrzeug verwendet werden und weist zwei Kameras auf, die jeweils mit einer Fischaugenlinse ausgestattet sind. Die Kameras sind mit einem Computer verbunden, der zwei Sets von Bildbereitstellungsvorrichtungen für ein Entzerrungsverfahren der Bilder der Kameras aufweist.

Es ist eine Aufgabe der vorliegenden Erfindung, eine Umgebungsüberwachungsvorrichtung sowie ein Verfahren zum Betreiben einer Umgebungsüberwachungsvorrichtung vorzuschlagen, durch die bei geringer Komplexität und geringen Kosten eine hohe Bandbreite von Applikationen ausführbar ist.

Diese Aufgabe wird durch den Gegenstand der unabhängigen Ansprüche gelöst. Vorteilhafte Weiterbildungen sind Gegenstand der abhängigen Ansprüche und ergeben sich zusätzlich aus der Beschreibung und den Zeichnungen.

Die erfindungsgemäße Umgebungsüberwachungsvorrichtung dient zur Verwendung bei Fahrzeugen, insbesondere Baumaschinen oder landwirtschaftliche Maschinen, und umfasst eine Stereokamera, welche zwei Fischaugenobjektive aufweist, eine Bildsensorvorrichtung mit wenigstens zwei Sensorbereichen zum Erfassen von optischen Signalen der Fischaugenobjektive in jeweils einem der Sensorbereiche und zum Erzeugen und Ausgeben von Bilddatensignalen basierend auf den jeweiligen optischen Signalen, eine Verarbeitungseinheit zum Verarbeiten der von der Bildsensorvorrichtung ausgegebenen Bilddatensignale und zum Bereitstellen der verarbeiteten Bilddatensignale, insbesondere zur Verwendung durch eine derzeit durch die Umgebungsüberwachungsvorrichtung ausgeführte Applikation, und eine Steuereinheit. Die Sensorbereiche weisen jeweils wenigstens einen ersten Teilbereich, der einem ersten Öffnungswinkel innerhalb des maximalen Öffnungswinkels des jeweiligen Fischaugenobjektivs entspricht, und einen zweiten Teilbereich, der einem zweiten Öffnungswinkel innerhalb des maximalen Öffnungswinkels des jeweiligen Fischaugenobjektivs entspricht, auf. Der erste Öffnungswinkel und der zweite Öffnungswinkel unterscheiden sich voneinander. Die Verarbeitungseinheit ist einstellbar, um die Bilddatensignale selektiv entsprechend nur einem der Teilbereiche zu verarbeiten. Die Steuereinheit ist ausgebildet, die Verarbeitungseinheit einzustellen, insbesondere auf einen der Teilbereiche, sodass die Bilddatensignale, insbesondere zu einem jeweiligen Zeitpunkt, entsprechend nur diesem Teilbereich verarbeitet werden.

Gemäß der Erfindung ist es möglich, einmal Bilddatensignale aus der Bildsensorvorrichtung auszulesen und dann bevorzugt auf zumindest zwei verschiedene Arten zu verarbeiten, nämlich einmal für den ersten Teilbereich und einmal für den zweiten Teilbereich. Die Verarbeitungseinheit kann dazu also wahlweise (d.h. selektiv) eingestellt werden, entweder Bilddatensignale des ersten oder des zweiten Teilbereichs zu verarbeiten. Auf diese Weise ist es möglich, z.B. zunächst im ersten Teilbereich eine hohe Genauigkeit bei der Tiefenauflösung zu erzielen, wohingegen danach z.B. mit dem zweiten Teilbereich ein großes Bildfeld abgedeckt wird. Es ist auch möglich, für jeden Teilbereich die Bilddatensignale separat auszulesen, insbesondere nur aus den Teilen der Sensorbereiche, welche Bilddaten für den entsprechenden Teilbereich liefern. Das Auslesen für verschiedene Teilbereiche kann dann zeitlich nacheinander erfolgen.

Die Bildsensorvorrichtung kann grundsätzlich entweder für jedes Fischaugenobjektiv einen eigenen Bildsensor aufweisen, oder die Bildsensorvorrichtung weist einen Bildsensor auf, auf welchen beide Fischaugenobjektive projizieren. Das heißt, die Sensorbereiche können entweder Bereiche eines einzigen Bildsensors sein, welche nebeneinander angeordnet sind oder sich auch teilweise überlappen können, oder sie können Bereiche zweier unterschiedlicher Bildsensoren innerhalb der Bildsensorvorrichtung sein. Die Sensorbereiche können insbesondere jeweils als zweidimensionale Anordnung (Array) ausgebildet sein, z.B. als CMOS- oder CCD-Bildsensoren, welche optische Signale von dem jeweiligen Fischaugenobjektiv empfängt und darauf basierend elektronische Signale, die Bilddatensignale, erzeugt.

Der erste und der zweite Öffnungswinkel unterscheiden sich voneinander und sind kleiner als der maximale Öffnungswinkel oder entsprechen dem maximalen Öffnungswinkel. Somit unterscheiden sich auch der erste Teilbereich und der zweite Teilbereich voneinander. Der maximale Öffnungswinkel der Fischaugenobjektive kann etwa ungefähr 180° entsprechen oder nur geringfügig kleiner als 180° sein und sich im Bereich von 170° bis 180° bewegen. Der erste Öffnungswinkel kann beispielsweise in einem Bereich von 60° bis 100° liegen und bevorzugt 60° oder 90° betragen. Der zweite Öffnungswinkel kann beispielsweise in einem Bereich von 100° bis 160° liegen und bevorzugt 130° oder 140° betragen.

Die Sensorbereiche können so ausgebildet sein, dass weniger als der maximale Öffnungswinkel eines Fischaugenobjektivs auf den Sensorbereich abgebildet wird. Der auf den Sensorbereich abgebildete Öffnungswinkel kann insbesondere dem zweiten Öffnungswinkel entsprechen. Der zweite Teilbereich kann dann dem kompletten Sensorbereich eines Fischaugenobjektivs entsprechen.

Der erste Teilbereich und der zweite Teilbereich können bevorzugt rechteckig ausgebildet sein. Weiter bevorzugt kann der erste Teilbereich vollständig in dem zweiten Teilbereich enthalten sein, wobei der erste Teilbereich z.B. die Hälfte oder ein Viertel der Fläche des zweiten Teilbereichs einnimmt.

Bei dem Fischaugenobjektiv kann es sich insbesondere um ein äquidistantes Fischaugenobjektiv handeln.

Durch Einstellung der Verarbeitungseinheit werden die Bilddatensignale entsprechend nur einem der Teilbereiche verarbeitet. Somit kann die Verarbeitungseinheit durch die Steuereinheit eingestellt werden, sodass die Bilddatensignale nur diesem Teilbereich verarbeitet werden. Dies ermöglicht, dass durch die Steuereinheit eingestellt werden kann, ob Bilddaten entweder nur für einen kleinen oder für einen großen Öffnungswinkel genutzt werden, da erst die von der Verarbeitungseinheit verarbeiteten Bilddatensignale zur Verwendung durch die Applikation bereitgestellt werden. Die Einstellung der Verarbeitungseinheit durch die Steuereinheit kann insbesondere abhängig von der ausgeführten Applikation sein, sodass Bilddaten je nach Applikation entweder mit großem Öffnungswinkel oder mit im Vergleich dazu kleinerem Öffnungswinkel, dafür jedoch mit verbesserter Tiefengenauigkeit und größerem Entfernungsbereich, gewonnen werden können.

Vorzugsweise ist die Verarbeitungseinheit während des Betriebs der Stereokamera einstellbar, um die Bilddatensignale selektiv entsprechend nur einem der Teilbereiche zu verarbeiten. Während des Betriebs bedeutet, dass auch während der Laufzeit zwischen den Teilbereichen, die den jeweiligen Öffnungswinkeln entsprechen, umgeschaltet werden kann. Das heißt, dass zunächst Bilddatensignale entsprechend einem großen Öffnungswinkel und später entsprechend einem kleineren Öffnungswinkel oder umgekehrt verarbeitet und für die Applikation bereitgestellt werden können, wenn etwa während des Betriebs die von der Umgebungsüberwachungsvorrichtung ausgeführte Applikation geändert wird.

Eine Auflösung der verarbeiteten Bilddatensignale kann von der Einstellung der Verarbeitungseinheit auf einen der Teilbereiche unabhängig sein. Für eine bestmögliche laterale Objektauflösung ist eine größtmögliche Bildauflösung ebenso erforderlich wie für eine bestmögliche Tiefenauflösung. Die erreichte Bildauflösung ist indes, abgesehen von der Rechenleistung, nur durch das Objektiv und die Auflösung des Bildsensors begrenzt. Bei Fischaugenobjektiven ist aufgrund der tonnenförmig verzeichneten Abbildung die Szeneninformation, die auf ein Pixel abgebildet wird, am Rand des Bildes höher als im Zentrum des Bildes, wobei dieser Effekt größer wird, je größer der Öffnungswinkel ist. Bei maximalem Öffnungswinkel ist somit die maximale Auflösung des verarbeiteten Bildes nur begrenzt durch die Randbereiche des Eingangsbildes, also der von der Bildsensorvorrichtung ausgegebenen Bilddatensignale, wodurch Informationsverlust im Zentrum verursacht wird. Bei einem vergleichsweise kleineren Öffnungswinkel jedoch kann die komplette Information im Bildzentrum der von der Bildsensorvorrichtung erhaltenen Bilddatensignale verwendet werden, da die Randbereiche hierbei nicht benötigt werden. Vereinfacht gesagt werden die Bilddatensignale bei vergleichsweise großem Öffnungswinkel während der Verarbeitung verkleinert, wohingegen bei vergleichsweise kleinem Öffnungswinkel das verarbeitete Bild in etwa gleich groß sein kann wie das von der Bildsensorvorrichtung erhaltene Bild bzw. die erhaltenen Bilddatensignale.

Vorteilhaft ist die Verarbeitungseinheit ausgebildet, die Bilddatensignale bei der Verarbeitung zu rektifizieren. Das Rektifizieren bedeutet, dass die Bilddatensignale dahingehend verändert werden, dass unter anderem geometrische Abbildungsfehler korrigiert werden. Ein rektifiziertes Einzelbild hat die Eigenschaft eines einheitlichen Abbildungsmaßstabs über den gesamten Bildbereich. Ein Objekt an beliebiger Stelle im Bild wird dadurch auf die gleiche Anzahl von Pixeln abgebildet. Insbesondere kann das Rektifizieren das Herstellen des Stereonormalfalls beinhalten, bei welchem zum einen die Verzeichnung des jeweiligen Fischaugenobjektivs korrigiert und zum anderen das Kamera- oder Objektivpaar zueinander ausgerichtet ist. Hierbei werden die beiden Kameras zueinander ausgerichtet, sodass horizontale Linien in der Szene im rektifizieren Stereobildpaar auf einer Bildzeile wiederzufinden sind.

Das Rektifizieren der Bilddatensignale kann das Strecken der Bildränder und/oder das Stauchen des Bildzentrums umfassen. Zudem kann sich das Rektifizieren in Abhängigkeit von der Einstellung der Verarbeitungseinheit auf einen der Teilbereiche unterscheiden. Insbesondere wird bei Einstellung auf einen Teilbereich, der einem im Vergleich kleineren Öffnungswinkel entspricht, weniger Korrektur von Abbildungsfehlern erforderlich als bei Einstellung auf einen Teilbereich, der einem im Vergleich größeren Öffnungswinkel entspricht.

Das Rektifizieren kann außerdem das Verändern einer Auflösung der Bilddatensignale umfassen. An das Rektifizieren kann sich das Skalieren anschließen. Insbesondere kann die Auflösung der verarbeiteten Bilddatensignale, das heißt nach dem Rektifizieren und gegebenenfalls Skalieren, jeweils gleich sein, und zwar unabhängig davon, entsprechend welchem Teilbereich die Bilddatensignale verarbeitet werden. Somit werden stets Bilddatensignale mit derselben Auflösung zur weiteren Verwendung bereitgestellt, was die nachgelagerte Weiterverarbeitung, beispielsweise durch FPGA ("Field Programmable Gate Array") oder ASIC ("application-specific integrated circuit"), erheblich vereinfacht und Rechenleistung reduziert.

Somit können durch unterschiedliche Bildrektifizierungen 2D-Daten und Tiefendaten mit unterschiedlichen Eigenschaften erzeugt werden. Es kann entweder ein Bild mit großem Öffnungswinkel, aber begrenzter Tiefenauflösung und geringerer lateraler Auflösung zur Erkennung von Objekten oder ein Bild mit verbesserter lateraler Auflösung und Tiefenauflösung, aber mit begrenztem Öffnungswinkel erzeugt werden, wobei beide Bilder dieselbe Auflösung aufweisen können.

Die Bildsensorvorrichtung ist einstellbar, um die Bilddatensignale selektiv entsprechend nur einem der Teilbereiche zu erzeugen und auszugeben. Dabei kann die Steuereinheit ausgebildet sein, die Bildsensorvorrichtung entsprechend einzustellen, insbesondere auf einen der Teilbereiche, sodass die Bilddatensignale basierend auf den nur diesem Teilbereich empfangenen optischen Signalen erzeugt und ausgegeben werden. Es können also z. B. nur die Pixel eines Teilbereichs ausgelesen werden. So kann die Erzeugung und Ausgabe von Bilddatensignalen durch die Bildsensorvorrichtung beispielsweise auf einen vorgegebenen Öffnungswinkel beschränkt und die Menge der zu übertragenden Bilddatensignale verringert werden.

Das erfindungsgemäße Verfahren dient zum Betreiben einer Umgebungsüberwachungsvorrichtung, welche eine Stereokamera mit zwei Fischaugenobjektiven und eine Bildsensorvorrichtung mit wenigstens zwei Sensorbereichen zum Erfassen von optischen Signalen der Fischaugenobjektive in jeweils einem der Sensorbereiche und zum Erzeugen und Ausgeben von Bilddatensignalen basierend auf den jeweiligen optischen Signalen umfasst, wobei die Sensorbereiche jeweils wenigstens einen ersten Teilbereich, der einem ersten Öffnungswinkel innerhalb des maximalen Öffnungswinkels des jeweiligen Fischaugenobjektivs entspricht, und einen zweiten Teilbereich, der einem zweiten Öffnungswinkel innerhalb des maximalen Öffnungswinkels des jeweiligen Fischaugenobjektivs entspricht, aufweisen, wobei sich der erste Öffnungswinkel und der zweite Öffnungswinkel voneinander unterscheiden, wobei die Bildsensorvorrichtung einstellbar ist, um die Bilddatensignale selektiv entsprechend nur einem der Teilbereiche zu erzeugen und auszugeben.

Das Verfahren weist die folgenden Schritte auf:
- Erzeugen einer Anwendungsanforderung basierend auf einer derzeit durch die Umgebungsüberwachungsvorrichtung ausgeführten Applikation,
- Empfangen der von der Bildsensorvorrichtung ausgegebenen Bilddatensignale und Verarbeiten der Bilddatensignale, insbesondere zu einem jeweiligen Zeitpunkt, entsprechend nur einem der Teilbereiche selektiv in Abhängigkeit von der Anwendungsanforderung und
- Bereitstellen der verarbeiteten Bilddatensignale, insbesondere zur Verwendung der verarbeiteten Bilddatensignale durch die Applikation.

Gemäß dem Verfahren wird in Abhängigkeit von der ausgeführten Applikation die Anwendungsanforderung erzeugt, welche eine Information enthält, welche Applikation oder Anwendung derzeit von der Umgebungsüberwachungsvorrichtung ausgeführt wird oder welche Bilddatensignale von der Applikation benötigt werden, das heißt Bilddatensignale entsprechend welchem der verfügbaren Öffnungswinkel innerhalb des maximalen Öffnungswinkels, beispielsweise entsprechend dem ersten Öffnungswinkel oder dem zweiten Öffnungswinkel. Somit ist durch die Anwendungsanforderung definiert, ob Bilddatensignale mit großem oder kleinem Öffnungswinkel erforderlich sind. Daraufhin werden die Bilddatensignale entsprechend nur dem Teilbereich verarbeitet, welcher dem gewünschten Öffnungswinkel entspricht.

Vorzugsweise werden die Bilddatensignale beim Verarbeiten vor dem Bereitstellen rektifiziert. Zum Rektifizieren wird auf die obigen Ausführungen Bezug genommen. Das Rektifizieren der Bilddatensignale kann das Strecken der Bildränder und/oder das Stauchen des Bildzentrums umfassen. Zudem kann sich das Rektifizieren in Abhängigkeit von der Verarbeitung der Bilddatensignale entsprechend nur einem der Teilbereiche unterscheiden. Beim Rektifizieren kann zudem die Auflösung der Bilddatensignale verändert werden.

Vorzugsweise umfasst das Verfahren die folgenden Schritte:
Verarbeiten und Rektifizieren der Bilddatensignale entsprechend nur dem ersten Teilbereich,
daran anschließend das Verarbeiten und Rektifizieren der Bilddatensignale entsprechend nur dem zweiten Teilbereich und
das Zusammenführen der rektifizierten Bilddatensignale entsprechend dem ersten Teilbereich und der rektifizierten Bilddatensignale entsprechend dem zweiten Teilbereich zu zusammengeführten Bilddatensignalen.

Dadurch können Bilddatensignale entsprechend einem kleineren und einem größeren Öffnungswinkel parallel prozessiert und anschließend zusammengeführt werden. Das Zusammenführen kann insbesondere einfach und effizient gestaltet werden, wenn bestimmte Kalibrierparameter eingeschränkt werden, sodass ein Vielfaches der Brennweite (z. B. zweifach) für die verschiedenen Öffnungswinkel gefordert wird. Das Zusammenführen führt zu Bilddaten, welche im Bildzentrum eine um das Vielfache der Brennweite (z. B. zweifach) laterale Auflösung und Tiefenauflösung im Vergleich zum Bildrand aufweisen.

Die Erfindung betrifft ferner ein Computerprogramm, umfassend Befehle, die bei der Ausführung des Programms durch einen Computer diesen veranlassen, das vorstehend beschriebene Verfahren auszuführen, und ein computerlesbares Speichermedium, umfassend Befehle, die bei der Ausführung durch einen Computer diesen veranlassen, das vorstehend beschriebene Verfahren auszuführen.

Die oben im Zusammenhang mit der Umgebungsüberwachungsvorrichtung gemachten Angaben gelten gleichermaßen für das Verfahren zum Betreiben einer Umgebungsüberwachungsvorrichtung und umgekehrt. Gleiches gilt für die Vorrichtung zur Datenverarbeitung, das Computerprogramm und das computerlesbare Speichermedium.

Die Erfindung wird nachfolgend rein beispielhaft anhand eines in den Zeichnungen schematisch gezeigten Ausführungsbeispiels erläutert. Dabei zeigt:
- Fig. 1: eine schematische Draufsicht eines Fahrzeugs mit einer Umgebungsüberwachungsvorrichtung gemäß einem Ausführungsbeispiel,
- Fig. 2: ein Diagramm, welches den Aufbau der Umgebungsüberwachungsvorrichtung aus Fig. 1 schematisch veranschaulicht, und
- Fig. 3: eine schematische Darstellung der Stereokamera mit den Fischaugenobjektiven und der zugehörigen Sensorbereiche der Umgebungsüberwachungsvorrichtung aus Fig. 1.

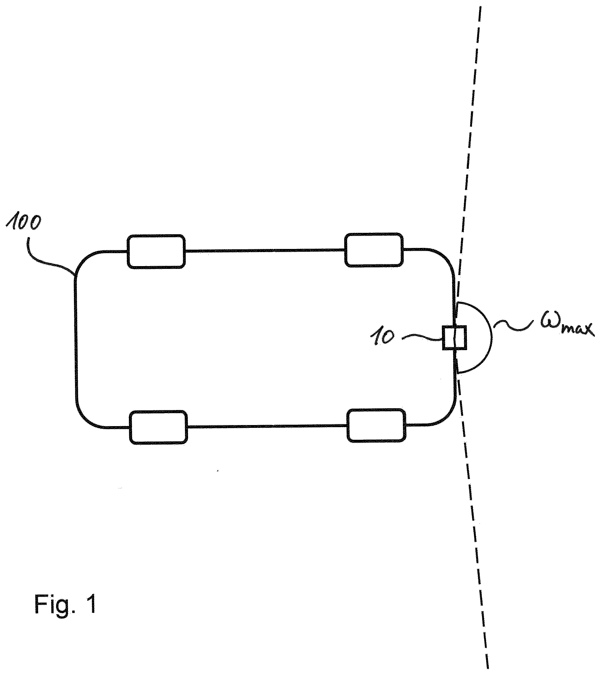

In Fig. 1 ist schematisch ein Fahrzeug 100 dargestellt, welches insbesondere als Baumaschine oder landwirtschaftliche Maschine ausgestaltet sein kann. Das Fahrzeug 100 weist in seinem Frontbereich eine Umgebungsüberwachungsvorrichtung 10 auf, welche nachfolgend noch genauer beschrieben wird. Grundsätzlich ist denkbar, dass Umgebungsüberwachungsvorrichtungen 10 zusätzlich zur Front oder alternativ dazu an den Seiten oder am Heck des Fahrzeugs 100 angeordnet sind.

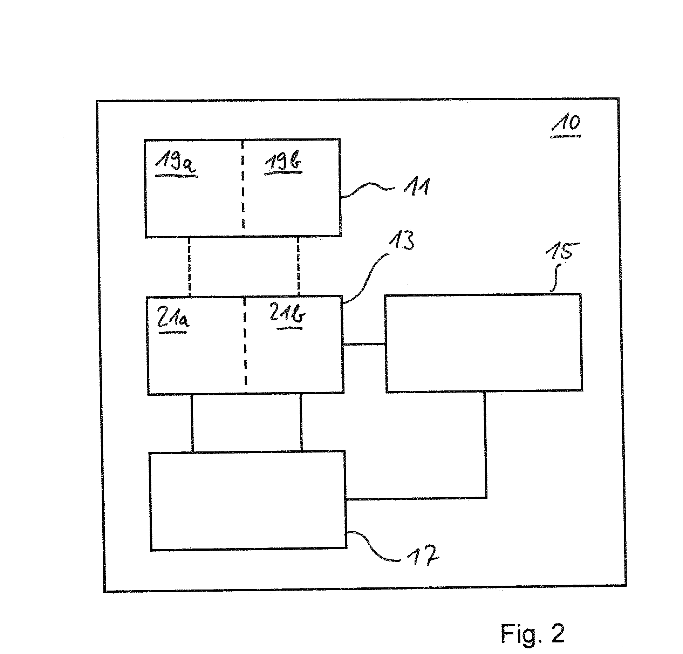

Wie Fig. 2 zeigt, weist die Umgebungsüberwachungsvorrichtung 10 eine Stereokamera 11, welche zwei parallel zueinander angeordnete und ausgerichtete Fischaugenobjektive 19a, 19b umfasst, eine Bildsensorvorrichtung 13, eine Steuereinheit 15 und eine Verarbeitungseinheit 17 auf.

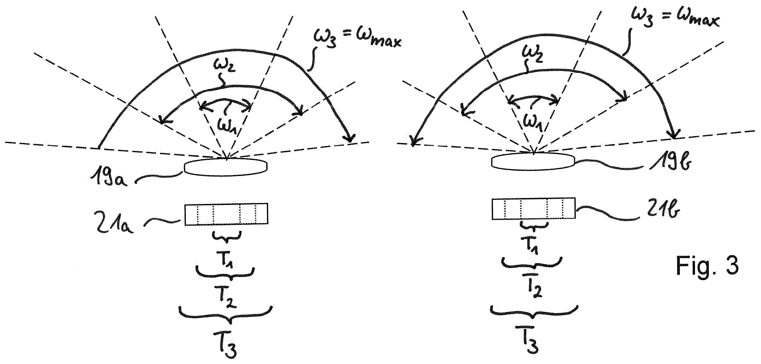

Die in Fig. 3 linsenförmig angedeuteten Fischaugenobjektive 19a, 19b haben jeweils einen maximalen Öffnungswinkel ωₘₐₓ, der nur geringfügig kleiner als 180° sein kann und sich etwa im Bereich von 170° bis 180° bewegt. Je nach von der Umgebungsüberwachungsvorrichtung 10 auszuführender Applikation kann es jedoch auch erforderlich sein, Bilddaten für einen kleineren Öffnungswinkel zu erhalten, um eine verbesserte Tiefengenauigkeit und einen größeren Entfernungsbereich zu erhalten. Durch das vorliegende Ausführungsbeispiel wird dies wie folgt gelöst:
Die Bildsensorvorrichtung 13 weist im vorliegenden Beispiel zwei Sensorbereiche 21a, 21b auf. Die Sensorbereiche 21a, 21b sind hier jeweils einem eigenen Bildsensor zugeordnet. Diese beiden Bildsensoren sind Teil der Bildsensorvorrichtung 13. In anderen Ausführungsformen kann es aber auch möglich sein, dass beide Sensorbereiche 21a, 21b durch nur einen Bildsensor bereitgestellt werden, der jedoch in sich zumindest funktional unterteilt ist.

Die beiden Sensorbereiche erhalten und erfassen optische Signale von dem jeweils zugeordneten Fischaugenobjektiv 19a, 19b, das heißt der Sensorbereich 21a ist dem Fischaugenobjektiv 19a zugeordnet, und der Sensorbereich 21b ist dem Fischaugenobjektiv 19b zugeordnet. Auf Basis der erfassten optischen Signale werden elektronische Bilddatensignale erzeugt und ausgegeben.

Im vorliegenden Beispiel ist jeder Sensorbereich 21a, 21b in Teilbereiche T1, T2, T3 unterteilt, wobei in diesem Fall der Teilbereich T3 den Teilbereich T2 mit einschließt und der Teilbereich T2 wiederum den Teilbereich T1 mit einschließt. Allerdings ist es grundsätzlich auch denkbar, dass die Teilbereiche T1, T2, T3 des jeweiligen Sensorbereichs 21a, 21b nebeneinander angeordnete Teilbereiche des Sensorbereichs 21a, 21b ohne Überlappung sind. Die Unterteilung der Sensorbereiche 21a, 21b in ihre Teilbereiche T1, T2, T3 ist dabei so zu verstehen, dass die Sensorbereiche 21a, 21b als zweidimensionale Anordnung (Array) ausgebildet sind, wobei die Teilbereiche T1, T2, T3 jeweils einem Teil dieser zweidimensionalen Anordnung entsprechen, in welchem jeweils optische Signale des zugeordneten Fischaugenobjektivs 19a, 19b entsprechend einem jeweiligen Öffnungswinkel ω₁, ω₂, ω₃ empfangen werden.

Der erste Teilbereich T1 entspricht jeweils einem ersten Öffnungswinkel ω₁ des jeweiligen Fischaugenobjektivs 19a, 19b. Das heißt, die in diesem Teilbereich T1 empfangenen optischen Signale geben die innerhalb des ersten Öffnungswinkels ω₁ vorhandenen Objekte wieder. In gleicher Weise entsprechen der zweite Teilbereich T2 einem zweiten Öffnungswinkel ω₂ und der dritte Teilbereich T3 einem dritten Öffnungswinkel ω₃ des jeweiligen Fischaugenobjektivs 19a, 19b. Die Öffnungswinkel ω₁, ω₂, ω₃ bewegen sich innerhalb des maximalen Öffnungswinkels ωₘₐₓ der Fischaugenobjektive 19a, 19b. In diesem Fall entspricht der dritte Öffnungswinkel ω₃ jeweils dem maximalen Öffnungswinkel ωₘₐₓ, wohingegen die beiden Öffnungswinkel ω₁, ω₂ kleiner als dieser sind.

Die Steuereinheit 15 ist per Signalverbindung mit der Verarbeitungseinheit 17 verbunden und kann die Verarbeitungseinheit 17 auf einen der Teilbereiche T1, T2, T3 einstellen. Das heißt, je nach Einstellung verarbeitet die Verarbeitungseinheit 17, welche signalleitend mit der Bildsensorvorrichtung 13 verbunden ist und die Bilddatensignale von der Bildsensorvorrichtung 13 empfängt, die Bilddatensignale nur entsprechend einem der Teilbereiche T1, T2, T3. Mit anderen Worten kennt die Verarbeitungseinheit 17 die den Teilbereichen T1, T2, T3 entsprechenden Pixelbereiche der von der Bildsensorvorrichtung 13 empfangenen Bilddatensignale und verwendet für die weitere Verarbeitung nur den Pixelbereich der Bilddatensignale, welcher dem jeweiligen Teilbereich T1, T2, T3 entspricht. Die Einstellung der Verarbeitungseinheit 17 durch die Steuereinheit 15 erfolgt insbesondere aufgrund einer Anwendungsanforderung, welche eine Information enthält, welche Applikation oder Anwendung derzeit von der Umgebungsüberwachungsvorrichtung 10 ausgeführt wird oder welche Bilddatensignale von der Applikation benötigt werden, das heißt Bilddatensignale entsprechend welchem der verfügbaren Öffnungswinkel ω₁, ω₂, ω₃. Somit wird die Verarbeitungseinheit 17 auf einen der Teilbereiche T1, T2, T3 eingestellt, sodass die Bilddatensignale selektiv entsprechend nur diesem Teilbereich T1, T2, T3 verarbeitet werden, welcher dem gewünschten Öffnungswinkel ω₁, ω₂, ω₃ entspricht.

Im Rahmen der Verarbeitung führt die Verarbeitungseinheit 17 eine Rektifizierung der Bilddatensignale durch. Dabei werden geometrische Abbildungsfehler korrigiert, die insbesondere bei Fischaugenobjektiven mit großen Öffnungswinkeln deutlich hervortreten. Insbesondere kann das Rektifizieren das Herstellen des Stereonormalfalls beinhalten, bei welchem zum einen die Verzeichnung des jeweiligen Fischaugenobjektivs korrigiert und zum anderen das Kamera- oder Objektivpaar zueinander ausgerichtet ist.

Während des Rektifizierens der Bilddatensignale durch die Verarbeitungseinheit 17 werden insbesondere die Bildränder gestreckt und das Bildzentrum gestaucht. Je nach Öffnungswinkel kann das Rektifizieren jedoch unterschiedlich ausgeprägt sein. Insbesondere ist bei vergleichsweise großem Öffnungswinkel, bei dem eine stark ausgeprägte Verzeichnung auftritt, eine ausgeprägtere Rektifizierung erforderlich als bei kleinem Öffnungswinkel.

Somit können durch unterschiedliche Bildrektifizierungen 2D-Daten und Tiefendaten mit unterschiedlichen Eigenschaften erzeugt werden. Es kann entweder ein Bild mit großem Öffnungswinkel, aber begrenzter Tiefenauflösung und geringerer lateraler Auflösung zur Erkennung von Objekten oder ein Bild mit verbesserter lateraler Auflösung und Tiefenauflösung, aber mit begrenztem Öffnungswinkel erzeugt werden, wobei beide Bilder dieselbe Auflösung aufweisen können. Die vorliegende Ausführungsform führt daher zu einer Umgebungsüberwachungsvorrichtung 10, welche eine vergleichsweise geringe Komplexität aufweist und zu geringen Kosten herstellbar ist, mit der zudem eine hohe Bandbreite von Applikationen ausführbar, da je nach Applikation entsprechende Bilddaten bereitgestellt werden können.

### Bezugszeichenliste

- 10: Umgebungsüberwachungsvorrichtung
- 11: Stereokamera
- 13: Bildsensorvorrichtung
- 15: Steuereinheit
- 17: Verarbeitungseinheit
- 19a: Fischaugenobjektiv
- 19b: Fischaugenobjektiv
- 21a: Sensorbereich
- 21b: Sensorbereich

- 100: Fahrzeug

- T1: Teilbereich
- T2: Teilbereich
- T3: Teilbereich
- ωₘₐₓ: maximaler Öffnungswinkel
- ω₁: Öffnungswinkel
- ω₂: Öffnungswinkel
- ω₃: Öffnungswinkel

## Patentansprüche

1. Umgebungsüberwachungsvorrichtung (10) für Fahrzeuge (100), umfassend eine Stereokamera (11), welche zwei Fischaugenobjektive (19a, 19b) aufweist,
eine Bildsensorvorrichtung (13) mit wenigstens zwei Sensorbereichen (21a, 21b) zum Erfassen von optischen Signalen der Fischaugenobjektive (19a, 19b) in jeweils einem der Sensorbereiche (21a, 21b) und zum Erzeugen und Ausgeben von Bilddatensignalen basierend auf den jeweiligen optischen Signalen,
eine Verarbeitungseinheit (17) zum Verarbeiten der von der Bildsensorvorrichtung (13) ausgegebenen Bilddatensignale und zum Bereitstellen der verarbeiteten Bilddatensignale und
eine Steuereinheit (15) zum Einstellen der Verarbeitungseinheit (17),
wobei die Sensorbereiche (21a, 21b) jeweils einen ersten Teilbereich (T1), der einem ersten Öffnungswinkel (ω₁) innerhalb des maximalen Öffnungswinkels (ωₘₐₓ) des jeweiligen Fischaugenobjektivs (19a, 19b) entspricht, und einen zweiten Teilbereich (T2), der einem zweiten Öffnungswinkel (ω₂) innerhalb des maximalen Öffnungswinkels (ωₘₐₓ) des jeweiligen Fischaugenobjektivs (19a, 19b) entspricht, aufweisen, wobei sich der erste Öffnungswinkel (ω₁) und der zweite Öffnungswinkel (ω₂) voneinander unterscheiden und **dadurch gekennzeichnet, dass** der erste Öffnungswinkel (ω₁) kleiner als der zweite Öffnungswinkel (ω₂) ist,
dass die Bildsensorvorrichtung (13) einstellbar ist, um die Bilddatensignale selektiv entsprechend nur einem der Teilbereiche (T1, T2) des jeweiligen Sensorbereichs (21a, 21b) zu erzeugen und auszugeben,
und dass die Verarbeitungseinheit (17) einstellbar ist, um die Bilddatensignale selektiv entsprechend nur einem der Teilbereiche (T1, T2) des jeweiligen Sensorbereichs (21a, 21b) zu verarbeiten.

2. Umgebungsüberwachungsvorrichtung (10) nach Anspruch 1,
**dadurch gekennzeichnet, dass** die Verarbeitungseinheit (17) während des Betriebs der Stereokamera (11) einstellbar ist, um die Bilddatensignale selektiv entsprechend nur einem der Teilbereiche (T1, T2) des jeweiligen Sensorbereichs (21a, 21b) zu verarbeiten.

3. Umgebungsüberwachungsvorrichtung (10) nach Anspruch 1 oder 2,
**dadurch gekennzeichnet, dass** eine Auflösung der verarbeiteten Bilddatensignale von der Einstellung der Verarbeitungseinheit (17) auf einen der Teilbereiche (T1, T2) unabhängig ist.

4. Umgebungsüberwachungsvorrichtung (10) nach einem der vorstehenden Ansprüche,
**dadurch gekennzeichnet, dass** die Verarbeitungseinheit (17) ausgebildet ist, die Bilddatensignale bei der Verarbeitung zu rektifizieren.

5. Verfahren zum Betreiben einer Umgebungsüberwachungsvorrichtung (10), welche
eine Stereokamera (11) mit zwei Fischaugenobjektiven (19a, 19b) und eine Bildsensorvorrichtung (13) mit wenigstens zwei Sensorbereichen (21a, 21b) zum Erfassen von optischen Signalen der Fischaugenobjektive (19a, 19b) in jeweils einem der Sensorbereiche (21a, 21b) und zum Erzeugen und Ausgeben von Bilddatensignalen basierend auf den jeweiligen optischen Signalen umfasst, wobei die Sensorbereiche (21a, 21b) jeweils einen ersten Teilbereich (T1), der einem ersten Öffnungswinkel (ω₁) innerhalb des maximalen Öffnungswinkels (ωₘₐₓ) des jeweiligen Fischaugenobjektivs (19a, 19b) entspricht, und einen zweiten Teilbereich (T2), der einem zweiten Öffnungswinkel (ω₂) innerhalb des maximalen Öffnungswinkels (ωₘₐₓ) des jeweiligen Fischaugenobjektivs (19a, 19b) entspricht, aufweisen, wobei sich der erste Öffnungswinkel (ω₁) und der zweite Öffnungswinkel (ω₂) voneinander unterscheiden und **dadurch gekennzeichnet, dass** der erste Öffnungswinkel (ω₁) kleiner als der zweite Öffnungswinkel (ω₂) ist,
wobei die Bildsensorvorrichtung (13) einstellbar ist, um die Bilddatensignale selektiv entsprechend nur einem der Teilbereiche (T1, T2) des jeweiligen Sensorbereichs (21a, 21b) zu erzeugen und auszugeben,
und wobei das Verfahren die folgenden Schritte aufweist:
- Erzeugen einer Anwendungsanforderung basierend auf einer derzeit durch die Umgebungsüberwachungsvorrichtung (10) ausgeführten Applikation,
- Empfangen der von der Bildsensorvorrichtung (13) ausgegebenen Bilddatensignale und Verarbeiten der Bilddatensignale entsprechend nur einem der Teilbereiche (T1, T2) des jeweiligen Sensorbereichs (21a, 21b) selektiv in Abhängigkeit von der Anwendungsanforderung und
- Bereitstellen der verarbeiteten Bilddatensignale.

6. Verfahren nach Anspruch 5,
**dadurch gekennzeichnet, dass** die Bilddatensignale beim Verarbeiten vor dem Bereitstellen rektifiziert werden.

7. Verfahren nach Anspruch 6,
**dadurch gekennzeichnet, dass** das Rektifizieren der Bilddatensignale das Strecken der Bildränder und/oder das Stauchen des Bildzentrums umfasst.

8. Verfahren nach Anspruch 6 oder 7,
**dadurch gekennzeichnet, dass** sich das Rektifizieren in Abhängigkeit von der Verarbeitung der Bilddatensignale entsprechend nur einem der Teilbereiche (T1, T2) unterscheidet.

9. Verfahren nach einem der Ansprüche 6 bis 8,
**dadurch gekennzeichnet, dass** das Rektifizieren das Verändern einer Auflösung der Bilddatensignale umfasst.

10. Verfahren nach einem der Ansprüche 5 bis 9,
**gekennzeichnet durch** das Verarbeiten und Rektifizieren der Bilddatensignale entsprechend nur dem ersten Teilbereich (T1),
daran anschließend das Verarbeiten und Rektifizieren der Bilddatensignale entsprechend nur dem zweiten Teilbereich (T2) und
das Zusammenführen der rektifizierten Bilddatensignale entsprechend dem ersten Teilbereich (T1) und der rektifizierten Bilddatensignale entsprechend dem zweiten Teilbereich (T2) zu zusammengeführten Bilddatensignalen.

11. Computerprogramm, umfassend Befehle, die bei der Ausführung des Programms durch einen Computer einer Umgebungsüberwachungsvorrichtung für Fahrzeuge diese veranlassen, das Verfahren nach einem der Ansprüche 5 bis 10 auszuführen.

12. Computerlesbares Speichermedium, umfassend Befehle, die bei der Ausführung durch einen Computer einer Umgebungsüberwachungsvorrichtung für Fahrzeuge diese veranlassen, das Verfahren nach einem der Ansprüche 5 bis 10 auszuführen.

## Claims

1. An environment monitoring apparatus (10) for vehicles (100), comprising a stereo camera (11) which has two fisheye lenses (19a, 19b),
an image sensor apparatus (13) having at least two sensor regions (21a, 21b) for detecting optical signals of the fisheye lenses (19a, 19b) in a respective one of the sensor regions (21a, 21b) and for generating and outputting image data signals based on the respective optical signals,
a processing unit (17) for processing the image data signals output by the image sensor apparatus (13) and for providing the processed image data signals, and
a control unit (15) for setting the processing unit (17),
wherein the sensor regions (21a, 21b) each have a first part region (T1), which corresponds to a first aperture angle (ω₁) within the maximum aperture angle (ωₘₐₓ) of the respective fisheye lens (19a, 19b), and a second part region (T2) which corresponds to a second aperture angle (ω₂) within the maximum aperture angle (ωₘₐₓ) of the respective fisheye lens (19a, 19b), wherein the first aperture angle (ω₁) and the second aperture angle (ω₂) differ from one another and **characterized in that**
the first aperture angle (ω₁) is smaller than the second aperture angle (ω₂), **in that** the image sensor apparatus (13) can be set to selectively generate and output the image data signals corresponding to only one of the part regions (T1, T2) of the respective sensor region (21a, 21b),
and **in that** the processing unit (17) can be set in order to selectively process the image data signals corresponding to only one of the part regions (T1, T2) of the respective sensor region (21a, 21b).

2. An environment monitoring apparatus (10) according to claim 1,
**characterized in that** the processing unit (17) can be set during operation of the stereo camera (11) to selectively process the image data signals corresponding to only one of the part regions (T1, T2) of the respective sensor region (21a, 21b).

3. An environment monitoring apparatus (10) according to claim 1 or 2,
**characterized in that** a resolution of the processed image data signals is independent of the setting of the processing unit (17) to one of the part regions (T1, T2).

4. An environment monitoring apparatus (10) according to any one of the preceding claims,
**characterized in that** the processing unit (17) is configured to rectify the image data signals during the processing.

5. A method for operating an environment monitoring apparatus (10), said environment monitoring apparatus (10) comprising
a stereo camera (11) having two fisheye lenses (19a, 19b) and
an image sensor apparatus (13) having at least two sensor regions (21a, 21b) for detecting optical signals of the fisheye lenses (19a, 19b) in a respective one of the sensor regions (21a, 21b) and for generating and outputting image data signals based on the respective optical signals, wherein the sensor regions (21a, 21b) each comprise a first part region (T1), which corresponds to a first aperture angle (ω₁) within the maximum aperture angle (ωₘₐₓ) of the respective fisheye lens (19a, 19b), and a second part region (T2) which corresponds to a second aperture angle (ω₂) within the maximum aperture angle (ωₘₐₓ) of the respective fisheye lens (19a, 19b), wherein the first aperture angle (ω₁) and the second aperture angle (ω₂) differ from one another and **characterized in that**
the first aperture angle (ω₁) is smaller than the second aperture angle (ω₂), wherein the image sensor apparatus (13) can be set to selectively generate and output the image data signals corresponding to only one of the part regions (T1, T2) of the respective sensor region (21a, 21b),
and wherein the method comprises the following steps:
- generating an application requirement based on an application currently executed by the environment monitoring apparatus (10),
- receiving the image data signals output by the image sensor apparatus (13) and processing the image data signals corresponding to only one of the part regions (T1, T2) of the respective sensor region (21a, 21b) selectively in dependence on the application requirement, and
- providing the processed image data signals.

6. A method according to claim 5,
**characterized in that** the image data signals are rectified during the processing before the provision.

7. A method according to claim 6,
**characterized in that** the rectification of the image data signals comprises stretching the image margins and/or compressing the image center.

8. A method according to claim 6 or 7,
**characterized in that** the rectification differs depending on the processing of the image data signals corresponding to only one of the part regions (T1, T2).

9. A method according to any one of the claims 6 to 8,
**characterized in that** the rectification comprises changing a resolution of the image data signals.

10. A method according to any one of the claims 5 to 9,
**characterized by** the processing and rectification of the image data signals corresponding to only the first part region (T1),
followed by the processing and rectification of the image data signals corresponding to only the second part region (T2), and
the merging of the rectified image data signals corresponding to the first part region (T1) and the rectified image data signals corresponding to the second part region (T2) to form merged image data signals.

11. A computer program comprising commands that, on the execution of the program by a computer of an environment monitoring apparatus for vehicles, cause said environment monitoring apparatus to perform the method according to any one of the claims 5 to 10.

12. A computer-readable storage medium comprising commands that, on the execution by a computer of an environment monitoring apparatus for vehicles, cause said environment monitoring apparatus to perform the method according to any one of the claims 5 to 10.

## Revendications

1. Dispositif (10) de surveillance de l'environnement pour véhicules (100), comprenant
une caméra stéréoscopique (11) qui présente deux objectifs fish-eye (19a, 19b),
un dispositif capteur d'image (13) qui présente au moins deux zones de capteur (21a, 21b) pour acquérir des signaux optiques des objectifs fish-eye (19a, 19b) dans respectivement l'une des zones de capteur (21a, 21b) et pour générer et émettre des signaux de données d'image sur la base des signaux optiques respectifs,
une unité de traitement (17) conçue pour traiter les signaux de données d'image émis par le dispositif capteur d'image (13) et pour fournir les signaux de données d'image traités, et
une unité de commande (15) conçue pour régler l'unité de traitement (17), dans lequel
les zones de capteur (21a, 21b) comprennent chacune une première zone partielle (T1) qui correspond à un premier angle d'ouverture (ω₁) au sein de l'angle d'ouverture maximal (ωₘₐₓ) de l'objectif fish-eye respectif (19a, 19b) et une deuxième zone partielle (T2) qui correspond à un deuxième angle d'ouverture (ω₂) au sein de l'angle d'ouverture maximal (ωₘₐₓ) de l'objectif fish-eye respectif (19a, 19b), le premier angle d'ouverture (ω₁) et le deuxième angle d'ouverture (ω₂) étants différents l'un de l'autre,
**caractérisé en ce que**
le premier angle d'ouverture (ω₁) est inférieur au deuxième angle d'ouverture (ω₂),
**en ce que** le dispositif capteur d'image (13) est réglable afin de générer et d'émettre les signaux de données d'image de manière sélective à partir d'une seule des zones partielles (T1, T2) de la zone de capteur respective (21a, 21b),
et **en ce que** l'unité de traitement (17) est réglable afin de traiter les signaux de données d'image de manière sélective à partir d'une seule des zones partielles (T1, T2) de la zone de capteur respective (21a, 21b).

2. Dispositif (10) de surveillance de l'environnement selon la revendication 1, **caractérisé en ce que** l'unité de traitement (17) est réglable pendant le fonctionnement de la caméra stéréoscopique (11) afin de traiter les signaux de données d'image de manière sélective à partir d'une seule des zones partielles (T1, T2) de la zone de capteur respective (21a, 21b).

3. Dispositif (10) de surveillance de l'environnement selon la revendication 1 ou 2,
**caractérisé en ce que** la résolution des signaux de données d'image traités est indépendante du réglage de l'unité de traitement (17) sur l'une des zones partielles (T1, T2).

4. Dispositif (10) de surveillance de l'environnement selon l'une des revendications précédentes,
**caractérisé en ce que** l'unité de traitement (17) est conçue pour rectifier les signaux de données d'image lors du traitement.

5. Procédé pour faire fonctionner un dispositif (10) de surveillance de l'environnement qui comprend
une caméra stéréoscopique (11) présentant deux objectifs fish-eye (19a, 19b) et
un dispositif capteur d'image (13) présentant au moins deux zones de capteur (21a, 21b) pour acquérir des signaux optiques des objectifs fish-eye (19a, 19b) dans respectivement l'une des zones de capteur (21a, 21b) et pour générer et émettre des signaux de données d'image sur la base des signaux optiques respectifs,
dans lequel
les zones de capteur (21a, 21b) comprennent chacune une première zone partielle (T1) qui correspond à un premier angle d'ouverture (ω₁) au sein de l'angle d'ouverture maximal (ωₘₐₓ) de l'objectif fish-eye respectif (19a, 19b) et une deuxième zone partielle (T2) qui correspond à un deuxième angle d'ouverture (ω₂) au sein de l'angle d'ouverture maximal (ωₘₐₓ) de l'objectif fish-eye respectif (19a, 19b), le premier angle d'ouverture (ω₁) et le deuxième angle d'ouverture (ω₂) étants différents l'un de l'autre,
**caractérisé en ce que**
le premier angle d'ouverture (ω₁) est inférieur au deuxième angle d'ouverture (ω₂),
le dispositif capteur d'image (13) étant réglable afin de générer et d'émettre les signaux de données d'image de manière sélective à partir d'une seule des zones partielles (T1, T2) de la zone de capteur respective (21a, 21b), et le procédé comprenant les étapes suivantes consistant à :
- générer une demande d'application basée sur une application actuellement exécutée par le dispositif (10) de surveillance de l'environnement,
- recevoir les signaux de données d'image émis par le dispositif capteur d'image (13) et traiter les signaux de données d'image à partir d'une seule des zones partielles (T1, T2) de la zone de capteur respective (21a, 21b) de manière sélective en fonction de la demande d'application et
- fournir les signaux de données d'image traités.

6. Procédé selon la revendication 5,
**caractérisé en ce que** les signaux de données d'image sont rectifiés lors du traitement, avant d'être fournis.

7. Procédé selon la revendication 6,
**caractérisé en ce que** la rectification des signaux de données d'image consiste à étrier les bords de l'image et/ou à comprimer le centre de l'image.

8. Procédé selon la revendication 6 ou 7,
**caractérisé en ce que** la rectification diffère en fonction du traitement des signaux de données d'image à partir d'une seule des zones partielles (T1, T2).

9. Procédé selon l'une des revendications 6 à 8,
**caractérisé en ce que** la rectification consiste à modifier une résolution des signaux de données d'image.

10. Procédé selon l'une des revendications 5 à 9,
**caractérisé par**
le traitement et la rectification des signaux de données d'image uniquement à partir de la première zone partielle (T1),
puis, le traitement et la rectification des signaux de données d'image uniquement à partir de la deuxième zone partielle (T2), et
la réunion des signaux de données d'image, rectifiés à partir de la première zone partielle (T1), et des signaux de données d'image, rectifiés à partir de la deuxième zone partielle (T2), en signaux de données d'image réunis.

11. Programme informatique comprenant des instructions qui, lors de l'exécution du programme par un ordinateur d'un dispositif de surveillance de l'environnement pour véhicules, amènent celui-ci à mettre en œuvre le procédé selon l'une des revendications 5 à 10.

12. Support de stockage lisible par ordinateur, comprenant des instructions qui, lorsqu'elles sont exécutées par un ordinateur d'un dispositif de surveillance de l'environnement pour véhicules, amènent celui-ci à mettre en œuvre le procédé selon l'une des revendications 5 à 10.
